# EUROPEAN PATENT APPLICATION

(11) **EP 3 941 116 A1**
(43) Date of publication of application: **19.01.2022**
(21) Application number: 21185910.3
(22) Date of filing: 15.07.2021
(51) Int. Cl.: H04W 36/00, H04W 36/14, H04W 88/06

(54) **PDU SESSION HANDOVER**

(30) Priority: 17.07.2020 IN 202041030507; 08.07.2021 US 202117370220
(71) Applicant: Apple Inc., Cupertino CA 95014 (US)
(72) Inventor: PRAKASAM, Sridhar, Cupertino, 95014 (US); KISS, Krisztian, Cupertino, 95014 (US); KOSHTA, Nirlesh, Cupertino, 95014 (US)
(74) Representative: Wardle, Callum Tarn

(57) **Abstract**

Apparatuses, systems, and methods for PDU session handover between cellular and non-cellular access technologies. The UE may determine to transfer one or more on-going PDU sessions from a first RAN to a second RAN based on detection of a mobility condition. The UE may transmit an allowed PDU session status IE to an AMF. The allowed PDU session IE may be transmitted via a registration request when the first RAN supports 3GPP access and the second RAN supports non-3GPP access. The allowed PDU session status IE may be transmitted via service request when the first RAN supports non-3GPP access and the second RAN supports 3GPP access. The allowed PDU session IE may trigger establishment of user plane resources for the one or more on-going PDU sessions via a UPF.

## Description

### FIELD

The invention relates to wireless communications, and more particularly to apparatuses, systems, and methods for PDU session handover between cellular and non-cellular access technologies.

### DESCRIPTION OF THE RELATED ART

Wireless communication systems are rapidly growing in usage. In recent years, wireless devices such as smart phones and tablet computers have become increasingly sophisticated. In addition to supporting telephone calls, many mobile devices now provide access to the internet, email, text messaging, and navigation using the global positioning system (GPS), and are capable of operating sophisticated applications that utilize these functionalities.

Long Term Evolution (LTE) has become the technology of choice for the majority of wireless network operators worldwide, providing mobile broadband data and high-speed Internet access to their subscriber base. LTE defines a number of downlink (DL) physical channels, categorized as transport or control channels, to carry information blocks received from medium access control (MAC) and higher layers. LTE also defines a number of physical layer channels for the uplink (UL).

For example, LTE defines a Physical Downlink Shared Channel (PDSCH) as a DL transport channel. The PDSCH is the main data-bearing channel allocated to users on a dynamic and opportunistic basis. The PDSCH carries data in Transport Blocks (TB) corresponding to a MAC protocol data unit (PDU), passed from the MAC layer to the physical (PHY) layer once per Transmission Time Interval (TTI). The PDSCH is also used to transmit broadcast information such as System Information Blocks (SIB) and paging messages.

As another example, LTE defines a Physical Downlink Control Channel (PDCCH) as a DL control channel that carries the resource assignment for UEs that are contained in a Downlink Control Information (DCI) message. Multiple PDCCHs can be transmitted in the same subframe using Control Channel Elements (CCE), each of which is a nine set of four resource elements known as Resource Element Groups (REG). The PDCCH employs quadrature phase-shift keying (QPSK) modulation, with four QPSK symbols mapped to each REG. Furthermore, 1, 2, 4, or 8 CCEs can be used for a UE, depending on channel conditions, to ensure sufficient robustness.

Additionally, LTE defines a Physical Uplink Shared Channel (PUSCH) as a UL channel shared by all devices (user equipment, UE) in a radio cell to transmit user data to the network. The scheduling for all UEs is under control of the LTE base station (enhanced Node B, or eNB). The eNB uses the uplink scheduling grant (DCI format 0) to inform the UE about resource block (RB) assignment, and the modulation and coding scheme to be used. PUSCH typically supports QPSK and quadrature amplitude modulation (QAM). In addition to user data, the PUSCH also carries any control information necessary to decode the information, such as transport format indicators and multiple-in multiple-out (MIMO) parameters. Control data is multiplexed with information data prior to digital Fourier transform (DFT) spreading.

A proposed next telecommunications standard moving beyond the current International Mobile Telecommunications-Advanced (IMT-Advanced) Standards is called 5th generation mobile networks or 5th generation wireless systems, or 5G for short (otherwise known as 5G-NR for 5G New Radio, also simply referred to as NR). 5G-NR may provide a higher capacity for a higher density of mobile broadband users, also supporting device-to-device, ultra-reliable, and massive machine type communications with lower latency and/or lower battery consumption. Further, the 5G-NR may allow for more flexible UE scheduling as compared to current LTE. Consequently, efforts are being made in ongoing developments of 5G-NR to take advantage of higher throughputs possible at higher frequencies.

### SUMMARY

Embodiments relate to wireless communications, and more particularly to apparatuses, systems, and methods for PDU session handover between cellular and non-cellular access technologies.

For example, in some embodiments, a user equipment device (UE) may determine to transfer one or more on-going protocol data unit (PDU) sessions from a first radio access network (RAN) to a second RAN based on detection of a mobility condition. The UE may transmit, in response to determining to transfer the one or more on-going PDU sessions, an allowed PDU session status information element (IE) to a core access and mobility management function (AMF). In some embodiments, the allowed PDU session status IE may trigger establishment of user plane resources for the one or more on-going PDU sessions via a user plane function (UPF). In some embodiments, the first RAN may support one of 3GPP access or non-3GPP access and the second RAN may support the other one of the 3GPP access and non-3GPP access. In some embodiments, when the first RAN supports 3GPP access and the second RAN supports non-3GPP access, the allowed PDU session status IE may be transmitted via a registration request. In some embodiments, when the first RAN supports non-3GPP access and the second RAN supports 3GPP access, the allowed PDU session status IE may be transmitted via a service request. In some embodiments, the mobility condition may include any, any combination of, and/or all of the UE determining that the second RAN has a higher signal quality than the first RAN, the UE determining that the second RAN has better signal strength as compared to the first RAN, a user preference of the second RAN over the first RAN, a carrier preference of the second RAN over the first RAN, and/or the UE receiving an indication from the first RAN to handover the one or more on-going PDU sessions to the second RAN.

In some embodiments, a UE may detect a mobility condition while connected to a first RAN and determine to transfer one or more on-going PDU sessions from the first RAN to a second RAN based on detection of the mobility condition. The UE may transmit, in response to determining to transfer the one or more on-going PDU sessions, an allowed PDU session status IE to an AMF . In some embodiments, the allowed PDU session status IE may trigger establishment of user plane resources for the one or more on-going PDU sessions via a user plane function (UPF). In some embodiments, the first RAN may support one of 3GPP access or non-3GPP access and the second RAN may support the other one of the 3GPP access and non-3GPP access. In some embodiments, when the first RAN supports 3GPP access and the second RAN supports non-3GPP access, the allowed PDU session status IE may be transmitted via a registration request. In some embodiments, when the first RAN supports non-3GPP access and the second RAN supports 3GPP access, the allowed PDU session status IE may be transmitted via a service request. In some embodiments, the mobility condition may include any, any combination of, and/or all of the UE determining that the second RAN has a higher signal quality than the first RAN, the UE determining that the second RAN has better signal strength as compared to the first RAN, a user preference of the second RAN over the first RAN, a carrier preference of the second RAN over the first RAN, and/or the UE receiving an indication from the first RAN to handover the one or more on-going PDU sessions to the second RAN.

As another example, a network entity (e.g., cellular network device), such as an AMF, may receive an allowed PDU session status IE from a UE based on a mobility condition occurring at a user equipment device (UE). The allowed PDU session status IE may indicate transfer of one or more on-going PDU sessions from a first RAN to a second RAN. The network entity may forward, to a UPF, the allowed PDU session status IE, where forwarding the allowed PDU session status IE may trigger establishment of user plane resources for the one or more on-going PDU sessions via the UPF. In some embodiments, the first RAN may support one of 3GPP access or non-3GPP access and the second RAN may support the other one of the 3GPP access and non-3GPP access. In some embodiments, when the first RAN supports 3GPP access and the second RAN supports non-3GPP access, the allowed PDU session status IE may be received via a registration request. In some embodiments, when the first RAN supports non-3GPP access and the second RAN supports 3GPP access, the allowed PDU session status IE may be received via a service request. In some embodiments, the mobility condition may include any, any combination of, and/or all of determining that the second RAN has a higher signal quality than the first RAN, determining that the second RAN has better signal strength as compared to the first RAN, a user preference of the second RAN over the first RAN, a carrier preference of the second RAN over the first RAN, and/or the first RAN indicating to the UE to handover the one or more on-going PDU sessions to the second RAN.

The techniques described herein may be implemented in and/or used with a number of different types of devices, including but not limited to unmanned aerial vehicles (UAVs), unmanned aerial controllers (UACs), a UTM server, base stations, access points, cellular phones, tablet computers, wearable computing devices, portable media players, and any of various other computing devices.

This Summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of various embodiments is considered in conjunction with the following drawings, in which:
Figure 1A illustrates an example wireless communication system according to some embodiments.
Figure 1B illustrates an example of a base station (BS) and an access point in communication with a user equipment (UE) device according to some embodiments.
Figure 2 illustrates an example simplified block diagram of a WLAN Access Point (AP), according to some embodiments.
Figure 3 illustrates an example block diagram of a BS according to some embodiments.
Figure 4 illustrates an example block diagram of a server according to some embodiments.
Figure 5A illustrates an example block diagram of a UE according to some embodiments.
Figure 5B illustrates an example block diagram of cellular communication circuitry, according to some embodiments.
Figure 6A illustrates an example of connections between an EPC network, an LTE base station (eNB), and a 5G NR base station (gNB).
Figure 6B illustrates an example of a protocol stack for an eNB and a gNB.
Figure 7A illustrates an example of a 5G network architecture that incorporates both 3GPP (e.g., cellular) and non-3GPP (e.g., non-cellular) access to the 5G CN, according to some embodiments.
Figure 7B illustrates an example of a 5G network architecture that incorporates both dual 3GPP (e.g., LTE and 5G NR) access and non-3GPP access to the 5G CN, according to some embodiments.
Figure 8 illustrates an example of a baseband processor architecture for a UE, according to some embodiments.
Figure 9 illustrates an example of a call flow between a UE and a network to handover a VoNR call to Wi-Fi.
Figure 10 illustrates an example of signaling for a UE to handover one or more PDU sessions from 3GPP access to non-3GPP access, according to some embodiments.
Figures 11-13 illustrate block diagrams of examples of methods for PDU session handover between cellular and non-cellular access technologies, according to some embodiments.

While the features described herein may be susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Acronyms

Various acronyms are used throughout the present disclosure. Definitions of the most prominently used acronyms that may appear throughout the present disclosure are provided below:
- **3GPP:** Third Generation Partnership Project
- **UE:** User Equipment
- **RF:** Radio Frequency
- **BS:** Base Station
- **DL:** Downlink
- **UL:** Uplink
- **LTE:** Long Term Evolution
- **NR:** New Radio
- **5GS:** 5G System
- **5GMM:** 5GS Mobility Management
- **5GC/5GCN:** 5G Core Network
- **IE:** Information Element
- **CE:** Control Element
- **MAC:** Medium Access Control
- **SSB:** Synchronization Signal Block
- **CSI-RS:** Channel State Information Reference Signal
- **PDCCH:** Physical Downlink Control Channel
- **PDSCH:** Physical Downlink Shared Channel
- **RRC:** Radio Resource Control
- **RRM:** Radio Resource Management
- **CORESET:** Control Resource Set
- **TCI:** Transmission Configuration Indicator
- **DCI:** Downlink Control Indicator

### Terms

The following is a glossary of terms used in this disclosure:

**Memory Medium** - Any of various types of non-transitory memory devices or storage devices. The term "memory medium" is intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium may include other types of non-transitory memory as well or combinations thereof. In addition, the memory medium may be located in a first computer system in which the programs are executed, or may be located in a second different computer system which connects to the first computer system over a network, such as the Internet. In the latter instance, the second computer system may provide program instructions to the first computer for execution. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Programmable Hardware Element** - includes various hardware devices comprising multiple programmable function blocks connected via a programmable interconnect. Examples include FPGAs (Field Programmable Gate Arrays), PLDs (Programmable Logic Devices), FPOAs (Field Programmable Object Arrays), and CPLDs (Complex PLDs). The programmable function blocks may range from fine grained (combinatorial logic or look up tables) to coarse grained (arithmetic logic units or processor cores). A programmable hardware element may also be referred to as "reconfigurable logic".

**Computer System (or Computer)** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (or combination of devices) having at least one processor that executes instructions from a memory medium.

**User Equipment (UE) (or "UE Device")** - any of various types of computer systems devices which are mobile or portable and which performs wireless communications. Examples of UE devices include mobile telephones or smart phones (e.g., iPhone^{™}, Android^{™}-based phones), portable gaming devices (e.g., Nintendo DS^{™}, PlayStation Portable^{™}, Gameboy Advance^{™}, iPhone^{™}), laptops, wearable devices (e.g. smart watch, smart glasses), PDAs, portable Internet devices, music players, data storage devices, other handheld devices, unmanned aerial vehicles (UAVs) (e.g., drones), UAV controllers (UACs), and so forth. In general, the term "UE" or "UE device" can be broadly defined to encompass any electronic, computing, and/or telecommunications device (or combination of devices) which is easily transported by a user and capable of wireless communication.

**Base Station** - The term "Base Station" has the full breadth of its ordinary meaning, and at least includes a wireless communication station installed at a fixed location and used to communicate as part of a wireless telephone system or radio system.

**Processing Element (or Processor)** - refers to various elements or combinations of elements that are capable of performing a function in a device, such as a user equipment or a cellular network device. Processing elements may include, for example: processors and associated memory, portions or circuits of individual processor cores, entire processor cores, processor arrays, circuits such as an ASIC (Application Specific Integrated Circuit), programmable hardware elements such as a field programmable gate array (FPGA), as well any of various combinations of the above.

**Channel** - a medium used to convey information from a sender (transmitter) to a receiver. It should be noted that since characteristics of the term "channel" may differ according to different wireless protocols, the term "channel" as used herein may be considered as being used in a manner that is consistent with the standard of the type of device with reference to which the term is used. In some standards, channel widths may be variable (e.g., depending on device capability, band conditions, etc.). For example, LTE may support scalable channel bandwidths from 1.4 MHz to 20MHz. In contrast, WLAN channels may be 22MHz wide while Bluetooth channels may be 1Mhz wide. Other protocols and standards may include different definitions of channels. Furthermore, some standards may define and use multiple types of channels, e.g., different channels for uplink or downlink and/or different channels for different uses such as data, control information, etc.

**Band** - The term "band" has the full breadth of its ordinary meaning, and at least includes a section of spectrum (e.g., radio frequency spectrum) in which channels are used or set aside for the same purpose.

**Wi-Fi** - The term "Wi-Fi" (or WiFi) has the full breadth of its ordinary meaning, and at least includes a wireless communication network or RAT that is serviced by wireless LAN (WLAN) access points and which provides connectivity through these access points to the Internet. Most modern Wi-Fi networks (or WLAN networks) are based on IEEE 802.11 standards and are marketed under the name "Wi-Fi". A Wi-Fi (WLAN) network is different from a cellular network.

**3GPP Access** - refers to accesses (e.g., radio access technologies) that are specified by 3GPP standards. These accesses include, but are not limited to, GSM/GPRS, LTE, LTE-A, and/or 5G NR. In general, 3GPP access refers to various types of cellular access technologies.

**Non-3GPP Access** - refers any accesses (e.g., radio access technologies) that are not specified by 3GPP standards. These accesses include, but are not limited to, WiMAX, CDMA2000, Wi-Fi, WLAN, and/or fixed networks. Non-3GPP accesses may be split into two categories, "trusted" and "untrusted": Trusted non-3GPP accesses can interact directly with an evolved packet core (EPC) and/or a 5G core (5GC) whereas untrusted non-3GPP accesses interwork with the EPC/5GC via a network entity, such as an Evolved Packet Data Gateway and/or a 5G NR gateway. In general, non-3GPP access refers to various types on non-cellular access technologies.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**Approximately** - refers to a value that is almost correct or exact. For example, approximately may refer to a value that is within 1 to 10 percent of the exact (or desired) value. It should be noted, however, that the actual threshold value (or tolerance) may be application dependent. For example, in some embodiments, "approximately" may mean within 0.1% of some specified or desired value, while in various other embodiments, the threshold may be, for example, 2%, 3%, 5%, and so forth, as desired or as required by the particular application.

**Concurrent** - refers to parallel execution or performance, where tasks, processes, or programs are performed in an at least partially overlapping manner. For example, concurrency may be implemented using "strong" or strict parallelism, where tasks are performed (at least partially) in parallel on respective computational elements, or using "weak parallelism", where the tasks are performed in an interleaved manner, e.g., by time multiplexing of execution threads.

Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112(f) interpretation for that component.

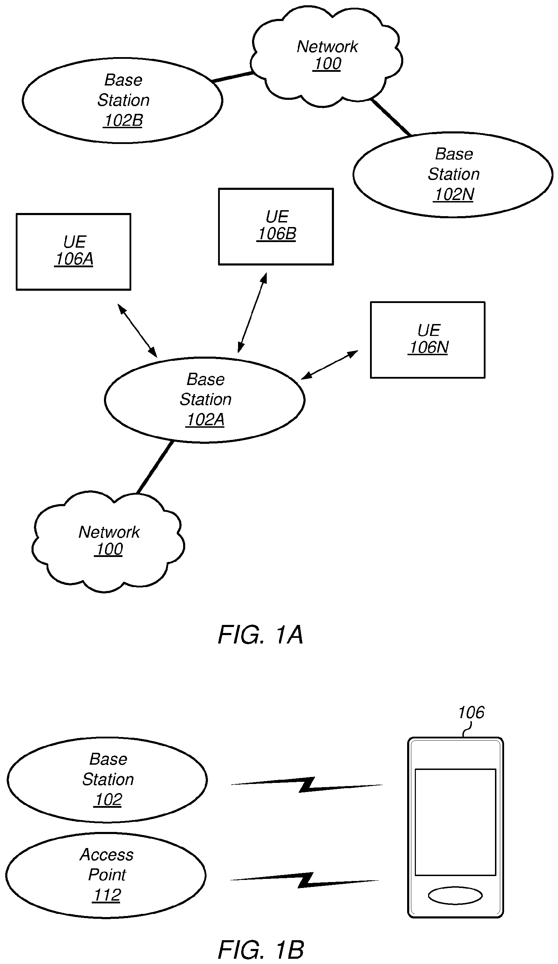

### Figures 1A and 1B: Communication Systems

Figure 1A illustrates a simplified example wireless communication system, according to some embodiments. It is noted that the system of Figure 1A is merely one example of a possible system, and that features of this disclosure may be implemented in any of various systems, as desired.

As shown, the example wireless communication system includes a base station 102A which communicates over a transmission medium with one or more user devices 106A, 106B, etc., through 106N. Each of the user devices may be referred to herein as a "user equipment" (UE). Thus, the user devices 106 are referred to as UEs or UE devices.

The base station (BS) 102A may be a base transceiver station (BTS) or cell site (a "cellular base station") and may include hardware that enables wireless communication with the UEs 106A through 106N.

The communication area (or coverage area) of the base station may be referred to as a "cell." The base station 102A and the UEs 106 may be configured to communicate over the transmission medium using any of various radio access technologies (RATs), also referred to as wireless communication technologies, or telecommunication standards, such as GSM, UMTS (associated with, for example, WCDMA or TD-SCDMA air interfaces), LTE, LTE-Advanced (LTE-A), 5G new radio (5G NR), HSPA, 3GPP2 CDMA2000 (e.g., 1xRTT, 1xEV-DO, HRPD, eHRPD), etc. Note that if the base station 102A is implemented in the context of LTE, it may alternately be referred to as an 'eNodeB' or 'eNB'. Note that if the base station 102A is implemented in the context of 5G NR, it may alternately be referred to as 'gNodeB' or 'gNB'.

As shown, the base station 102A may also be equipped to communicate with a network 100 (e.g., a core network of a cellular service provider, a telecommunication network such as a public switched telephone network (PSTN), and/or the Internet, among various possibilities). Thus, the base station 102A may facilitate communication between the user devices and/or between the user devices and the network 100. In particular, the cellular base station 102A may provide UEs 106 with various telecommunication capabilities, such as voice, SMS and/or data services.

Base station 102A and other similar base stations (such as base stations 102B...102N) operating according to the same or a different cellular communication standard may thus be provided as a network of cells, which may provide continuous or nearly continuous overlapping service to UEs 106A-N and similar devices over a geographic area via one or more cellular communication standards.

Thus, while base station 102A may act as a "serving cell" for UEs 106A-N as illustrated in Figure 1, each UE 106 may also be capable of receiving signals from (and possibly within communication range of) one or more other cells (which might be provided by base stations 102B-N and/or any other base stations), which may be referred to as "neighboring cells". Such cells may also be capable of facilitating communication between user devices and/or between user devices and the network 100. Such cells may include "macro" cells, "micro" cells, "pico" cells, and/or cells which provide any of various other granularities of service area size. For example, base stations 102A-B illustrated in Figure 1 might be macro cells, while base station 102N might be a micro cell. Other configurations are also possible.

In some embodiments, base station 102A may be a next generation base station, e.g., a 5G New Radio (5G NR) base station, or "gNB". In some embodiments, a gNB may be connected to a legacy evolved packet core (EPC) network and/or to a NR core (NRC) network. In addition, a gNB cell may include one or more transition and reception points (TRPs). In addition, a UE capable of operating according to 5G NR may be connected to one or more TRPs within one or more gNBs.

Note that a UE 106 may be capable of communicating using multiple wireless communication standards. For example, the UE 106 may be configured to communicate using a wireless networking (e.g., Wi-Fi) and/or peer-to-peer wireless communication protocol (e.g., Bluetooth, Wi-Fi peer-to-peer, etc.) in addition to at least one cellular communication protocol (e.g., GSM, UMTS (associated with, for example, WCDMA or TD-SCDMA air interfaces), LTE, LTE-A, 5G NR, HSPA, 3GPP2 CDMA2000 (e.g., 1xRTT, 1xEV-DO, HRPD, eHRPD), etc.). The UE 106 may also or alternatively be configured to communicate using one or more global navigational satellite systems (GNSS, e.g., GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

Figure 1B illustrates user equipment 106 (e.g., one of the devices 106A through 106N) in communication with a base station 102 and an access point 112, according to some embodiments. The UE 106 may be a device with both cellular communication capability and non-cellular communication capability (e.g., Bluetooth, Wi-Fi, and so forth) such as a mobile phone, a hand-held device, a computer or a tablet, or virtually any type of wireless device.

The UE 106 may include a processor that is configured to execute program instructions stored in memory. The UE 106 may perform any of the method embodiments described herein by executing such stored instructions. Alternatively, or in addition, the UE 106 may include a programmable hardware element such as an FPGA (field-programmable gate array) that is configured to perform any of the method embodiments described herein, or any portion of any of the method embodiments described herein.

The UE 106 may include one or more antennas for communicating using one or more wireless communication protocols or technologies. In some embodiments, the UE 106 may be configured to communicate using, for example, CDMA2000 (1xRTT / 1xEV-DO / HRPD / eHRPD), LTE/LTE-Advanced, or 5G NR using a single shared radio and/or GSM, LTE, LTE-Advanced, or 5G NR using the single shared radio. The shared radio may couple to a single antenna, or may couple to multiple antennas (e.g., for MIMO) for performing wireless communications. In general, a radio may include any combination of a baseband processor, analog RF signal processing circuitry (e.g., including filters, mixers, oscillators, amplifiers, etc.), or digital processing circuitry (e.g., for digital modulation as well as other digital processing). Similarly, the radio may implement one or more receive and transmit chains using the aforementioned hardware. For example, the UE 106 may share one or more parts of a receive and/or transmit chain between multiple wireless communication technologies, such as those discussed above.

In some embodiments, the UE 106 may include separate transmit and/or receive chains (e.g., including separate antennas and other radio components) for each wireless communication protocol with which it is configured to communicate. As a further possibility, the UE 106 may include one or more radios which are shared between multiple wireless communication protocols, and one or more radios which are used exclusively by a single wireless communication protocol. For example, the UE 106 might include a shared radio for communicating using either of LTE or 5G NR (or LTE or 1xRTTor LTE or GSM), and separate radios for communicating using each of Wi-Fi and Bluetooth. Other configurations are also possible.

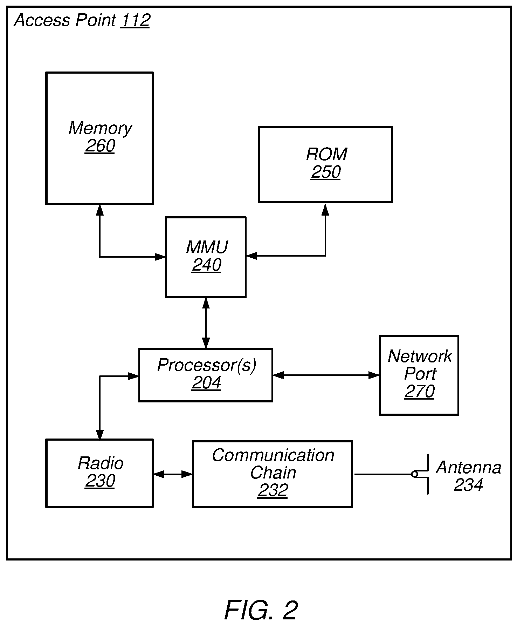

### Figure 2: Access Point Block Diagram

Figure 2 illustrates an exemplary block diagram of an access point (AP) 112. It is noted that the block diagram of the AP of Figure 2 is only one example of a possible system. As shown, the AP 112 may include processor(s) 204 which may execute program instructions for the AP 112. The processor(s) 204 may also be coupled (directly or indirectly) to memory management unit (MMU) 240, which may be configured to receive addresses from the processor(s) 204 and to translate those addresses to locations in memory (e.g., memory 260 and read only memory (ROM) 250) or to other circuits or devices.

The AP 112 may include at least one network port 270. The network port 270 may be configured to couple to a wired network and provide a plurality of devices, such as UEs 106, access to the Internet. For example, the network port 270 (or an additional network port) may be configured to couple to a local network, such as a home network or an enterprise network. For example, port 270 may be an Ethernet port. The local network may provide connectivity to additional networks, such as the Internet.

The AP 112 may include at least one antenna 234, which may be configured to operate as a wireless transceiver and may be further configured to communicate with UE 106 via wireless communication circuitry 230. The antenna 234 communicates with the wireless communication circuitry 230 via communication chain 232. Communication chain 232 may include one or more receive chains, one or more transmit chains or both. The wireless communication circuitry 230 may be configured to communicate via Wi-Fi or WLAN, e.g., 802.11. The wireless communication circuitry 230 may also, or alternatively, be configured to communicate via various other wireless communication technologies, including, but not limited to, 5G NR, Long-Term Evolution (LTE), LTE Advanced (LTE-A), Global System for Mobile (GSM), Wideband Code Division Multiple Access (WCDMA), CDMA2000, etc., for example when the AP is co-located with a base station in case of a small cell, or in other instances when it may be desirable for the AP 112 to communicate via various different wireless communication technologies.

In some embodiments, as further described below, an AP 112 may be configured to perform methods for PDU session handover between cellular and non-cellular access technologies as further described herein.

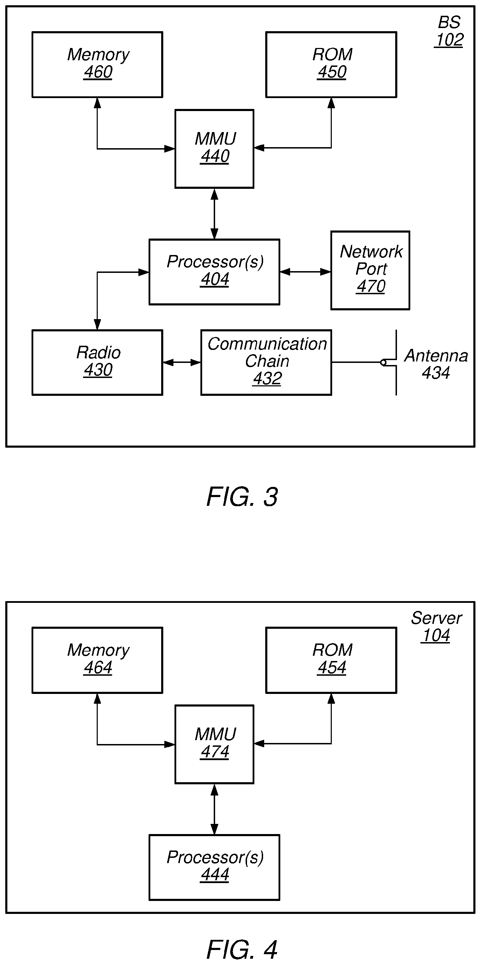

### Figure 3: Block Diagram of a Base Station

Figure 3 illustrates an example block diagram of a base station 102, according to some embodiments. It is noted that the base station of Figure 3 is merely one example of a possible base station. As shown, the base station 102 may include processor(s) 404 which may execute program instructions for the base station 102. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The base station 102 may include at least one network port 470. The network port 470 may be configured to couple to a telephone network and provide a plurality of devices, such as UE devices 106, access to the telephone network as described above in Figures 1 and 2.

The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

In some embodiments, base station 102 may be a next generation base station, e.g., a 5G New Radio (5G NR) base station, or "gNB". In such embodiments, base station 102 may be connected to a legacy evolved packet core (EPC) network and/or to a NR core (NRC) network. In addition, base station 102 may be considered a 5G NR cell and may include one or more transition and reception points (TRPs). In addition, a UE capable of operating according to 5G NR may be connected to one or more TRPs within one or more gNBs.

The base station 102 may include at least one antenna 434, and possibly multiple antennas. The at least one antenna 434 may be configured to operate as a wireless transceiver and may be further configured to communicate with UE devices 106 via radio 430. The antenna 434 communicates with the radio 430 via communication chain 432. Communication chain 432 may be a receive chain, a transmit chain or both. The radio 430 may be configured to communicate via various wireless communication standards, including, but not limited to, 5G NR, LTE, LTE-A, GSM, UMTS, CDMA2000, Wi-Fi, etc.

The base station 102 may be configured to communicate wirelessly using multiple wireless communication standards. In some instances, the base station 102 may include multiple radios, which may enable the base station 102 to communicate according to multiple wireless communication technologies. For example, as one possibility, the base station 102 may include an LTE radio for performing communication according to LTE as well as a 5G NR radio for performing communication according to 5G NR. In such a case, the base station 102 may be capable of operating as both an LTE base station and a 5G NR base station. As another possibility, the base station 102 may include a multi-mode radio which is capable of performing communications according to any of multiple wireless communication technologies (e.g., 5G NR and Wi-Fi, LTE and Wi-Fi, LTE and UMTS, LTE and CDMA2000, UMTS and GSM, etc.).

As described further subsequently herein, the BS 102 may include hardware and software components for implementing or supporting implementation of features described herein. The processor 404 of the base station 102 may be configured to implement or support implementation of part or all of the methods described herein, e.g., by executing program instructions stored on a memory medium (e.g., a non-transitory computer-readable memory medium). Alternatively, the processor 404 may be configured as a programmable hardware element, such as an FPGA (Field Programmable Gate Array), or as an ASIC (Application Specific Integrated Circuit), or a combination thereof. Alternatively (or in addition) the processor 404 of the BS 102, in conjunction with one or more of the other components 430, 432, 434, 440, 450, 460, 470 may be configured to implement or support implementation of part or all of the features described herein.

In addition, as described herein, processor(s) 404 may be comprised of one or more processing elements. In other words, one or more processing elements may be included in processor(s) 404. Thus, processor(s) 404 may include one or more integrated circuits (ICs) that are configured to perform the functions of processor(s) 404. In addition, each integrated circuit may include circuitry (e.g., first circuitry, second circuitry, etc.) configured to perform the functions of processor(s) 404.

Further, as described herein, radio 430 may be comprised of one or more processing elements. In other words, one or more processing elements may be included in radio 430. Thus, radio 430 may include one or more integrated circuits (ICs) that are configured to perform the functions of radio 430. In addition, each integrated circuit may include circuitry (e.g., first circuitry, second circuitry, etc.) configured to perform the functions of radio 430.

### Figure 4: Block Diagram of a Server

Figure 4 illustrates an example block diagram of a server 104, according to some embodiments. It is noted that the base station of Figure 4 is merely one example of a possible server. As shown, the server 104 may include processor(s) 444 which may execute program instructions for the server 104. The processor(s) 444 may also be coupled to memory management unit (MMU) 474, which may be configured to receive addresses from the processor(s) 444 and translate those addresses to locations in memory (e.g., memory 464 and read only memory (ROM) 454) or to other circuits or devices.

The server 104 may be configured to provide a plurality of devices, such as base station 102, UE devices 106, and/or UTM 108, access to network functions, e.g., as further described herein.

In some embodiments, the server 104 may be part of a radio access network, such as a 5G New Radio (5G NR) radio access network. In some embodiments, the server 104 may be connected to a legacy evolved packet core (EPC) network and/or to a NR core (NRC) network.

As described further subsequently herein, the server 104 may include hardware and software components for implementing or supporting implementation of features described herein. The processor 444 of the server 104 may be configured to implement or support implementation of part or all of the methods described herein, e.g., by executing program instructions stored on a memory medium (e.g., a non-transitory computer-readable memory medium). Alternatively, the processor 444 may be configured as a programmable hardware element, such as an FPGA (Field Programmable Gate Array), or as an ASIC (Application Specific Integrated Circuit), or a combination thereof. Alternatively (or in addition) the processor 444 of the server 104, in conjunction with one or more of the other components 454, 464, and/or 474 may be configured to implement or support implementation of part or all of the features described herein.

In addition, as described herein, processor(s) 444 may be comprised of one or more processing elements. In other words, one or more processing elements may be included in processor(s) 444. Thus, processor(s) 444 may include one or more integrated circuits (ICs) that are configured to perform the functions of processor(s) 444. In addition, each integrated circuit may include circuitry (e.g., first circuitry, second circuitry, etc.) configured to perform the functions of processor(s) 444.

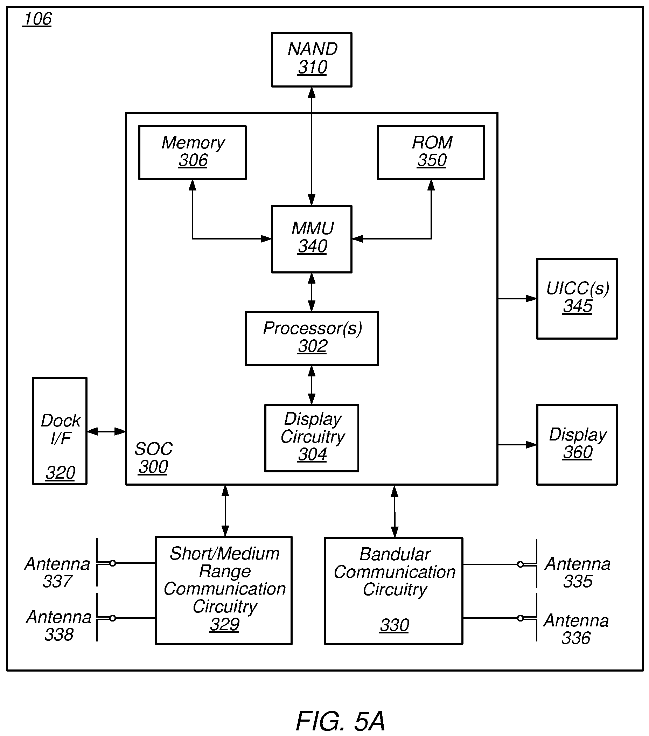

### Figure 5A: Block Diagram of a UE

Figure 5A illustrates an example simplified block diagram of a communication device 106, according to some embodiments. It is noted that the block diagram of the communication device of Figure 5A is only one example of a possible communication device. According to embodiments, communication device 106 may be a user equipment (UE) device, a mobile device or mobile station, a wireless device or wireless station, a desktop computer or computing device, a mobile computing device (e.g., a laptop, notebook, or portable computing device), a tablet, an unmanned aerial vehicle (UAV), a UAV controller (UAC) and/or a combination of devices, among other devices. As shown, the communication device 106 may include a set of components 300 configured to perform core functions. For example, this set of components may be implemented as a system on chip (SOC), which may include portions for various purposes. Alternatively, this set of components 300 may be implemented as separate components or groups of components for the various purposes. The set of components 300 may be coupled (e.g., communicatively; directly or indirectly) to various other circuits of the communication device 106.

For example, the communication device 106 may include various types of memory (e.g., including NAND flash 310), an input/output interface such as connector I/F 320 (e.g., for connecting to a computer system; dock; charging station; input devices, such as a microphone, camera, keyboard; output devices, such as speakers; etc.), the display 360, which may be integrated with or external to the communication device 106, and cellular communication circuitry 330 such as for 5G NR, LTE, GSM, etc., and short to medium range wireless communication circuitry 329 (e.g., Bluetooth^{™} and WLAN circuitry). In some embodiments, communication device 106 may include wired communication circuitry (not shown), such as a network interface card, e.g., for Ethernet.

The cellular communication circuitry 330 may couple (e.g., communicatively; directly or indirectly) to one or more antennas, such as antennas 335 and 336 as shown. The short to medium range wireless communication circuitry 329 may also couple (e.g., communicatively; directly or indirectly) to one or more antennas, such as antennas 337 and 338 as shown. Alternatively, the short to medium range wireless communication circuitry 329 may couple (e.g., communicatively; directly or indirectly) to the antennas 335 and 336 in addition to, or instead of, coupling (e.g., communicatively; directly or indirectly) to the antennas 337 and 338. The short to medium range wireless communication circuitry 329 and/or cellular communication circuitry 330 may include multiple receive chains and/or multiple transmit chains for receiving and/or transmitting multiple spatial streams, such as in a multiple-input multiple output (MIMO) configuration.

In some embodiments, as further described below, cellular communication circuitry 330 may include dedicated receive chains (including and/or coupled to, e.g., communicatively; directly or indirectly. dedicated processors and/or radios) for multiple RATs (e.g., a first receive chain for LTE and a second receive chain for 5G NR). In addition, in some embodiments, cellular communication circuitry 330 may include a single transmit chain that may be switched between radios dedicated to specific RATs. For example, a first radio may be dedicated to a first RAT, e.g., LTE, and may be in communication with a dedicated receive chain and a transmit chain shared with an additional radio, e.g., a second radio that may be dedicated to a second RAT, e.g., 5G NR, and may be in communication with a dedicated receive chain and the shared transmit chain.

The communication device 106 may also include and/or be configured for use with one or more user interface elements. The user interface elements may include any of various elements, such as display 360 (which may be a touchscreen display), a keyboard (which may be a discrete keyboard or may be implemented as part of a touchscreen display), a mouse, a microphone and/or speakers, one or more cameras, one or more buttons, and/or any of various other elements capable of providing information to a user and/or receiving or interpreting user input.

The communication device 106 may further include one or more smart cards 345 that include SIM (Subscriber Identity Module) functionality, such as one or more UICC(s) (Universal Integrated Circuit Card(s)) cards 345. Note that the term "SIM" or "SIM entity" is intended to include any of various types of SIM implementations or SIM functionality, such as the one or more UICC(s) cards 345, one or more eUICCs, one or more eSIMs, either removable or embedded, etc. In some embodiments, the UE 106 may include at least two SIMs. Each SIM may execute one or more SIM applications and/or otherwise implement SIM functionality. Thus, each SIM may be a single smart card that may be embedded, e.g., may be soldered onto a circuit board in the UE 106, or each SIM 310 may be implemented as a removable smart card. Thus the SIM(s) may be one or more removable smart cards (such as UICC cards, which are sometimes referred to as "SIM cards"), and/or the SIMs 310 may be one or more embedded cards (such as embedded UICCs (eUICCs), which are sometimes referred to as "eSIMs" or "eSIM cards"). In some embodiments (such as when the SIM(s) include an eUICC), one or more of the SIM(s) may implement embedded SIM (eSIM) functionality; in such an embodiment, a single one of the SIM(s) may execute multiple SIM applications. Each of the SIMs may include components such as a processor and/or a memory; instructions for performing SIM/eSIM functionality may be stored in the memory and executed by the processor. In some embodiments, the UE 106 may include a combination of removable smart cards and fixed/non-removable smart cards (such as one or more eUICC cards that implement eSIM functionality), as desired. For example, the UE 106 may comprise two embedded SIMs, two removable SIMs, or a combination of one embedded SIMs and one removable SIMs. Various other SIM configurations are also contemplated.

As noted above, in some embodiments, the UE 106 may include two or more SIMs. The inclusion of two or more SIMs in the UE 106 may allow the UE 106 to support two different telephone numbers and may allow the UE 106 to communicate on corresponding two or more respective networks. For example, a first SIM may support a first RAT such as LTE, and a second SIM 310 support a second RAT such as 5G NR. Other implementations and RATs are of course possible. In some embodiments, when the UE 106 comprises two SIMs, the UE 106 may support Dual SIM Dual Active (DSDA) functionality. The DSDA functionality may allow the UE 106 to be simultaneously connected to two networks (and use two different RATs) at the same time, or to simultaneously maintain two connections supported by two different SIMs using the same or different RATs on the same or different networks. The DSDA functionality may also allow the UE 106 to simultaneously receive voice calls or data traffic on either phone number. In certain embodiments the voice call may be a packet switched communication. In other words, the voice call may be received using voice over LTE (VoLTE) technology and/or voice over NR (VoNR) technology. In some embodiments, the UE 106 may support Dual SIM Dual Standby (DSDS) functionality. The DSDS functionality may allow either of the two SIMs in the UE 106 to be on standby waiting for a voice call and/or data connection. In DSDS, when a call/data is established on one SIM, the other SIM is no longer active. In some embodiments, DSDx functionality (either DSDA or DSDS functionality) may be implemented with a single SIM (e.g., a eUICC) that executes multiple SIM applications for different carriers and/or RATs.

As shown, the SOC 300 may include processor(s) 302, which may execute program instructions for the communication device 106 and display circuitry 304, which may perform graphics processing and provide display signals to the display 360. The processor(s) 302 may also be coupled to memory management unit (MMU) 340, which may be configured to receive addresses from the processor(s) 302 and translate those addresses to locations in memory (e.g., memory 306, read only memory (ROM) 350, NAND flash memory 310) and/or to other circuits or devices, such as the display circuitry 304, short to medium range wireless communication circuitry 329, cellular communication circuitry 330, connector I/F 320, and/or display 360. The MMU 340 may be configured to perform memory protection and page table translation or set up. In some embodiments, the MMU 340 may be included as a portion of the processor(s) 302.

As noted above, the communication device 106 may be configured to communicate using wireless and/or wired communication circuitry. The communication device 106 may be configured to perform methods for PDU session handover between cellular and non-cellular access technologies as further described herein.

As described herein, the communication device 106 may include hardware and software components for implementing the above features for a communication device 106 to communicate a scheduling profile for power savings to a network. The processor 302 of the communication device 106 may be configured to implement part or all of the features described herein, e.g., by executing program instructions stored on a memory medium (e.g., a non-transitory computer-readable memory medium). Alternatively (or in addition), processor 302 may be configured as a programmable hardware element, such as an FPGA (Field Programmable Gate Array), or as an ASIC (Application Specific Integrated Circuit). Alternatively (or in addition) the processor 302 of the communication device 106, in conjunction with one or more of the other components 300, 304, 306, 310, 320, 329, 330, 340, 345, 350, 360 may be configured to implement part or all of the features described herein.

In addition, as described herein, processor 302 may include one or more processing elements. Thus, processor 302 may include one or more integrated circuits (ICs) that are configured to perform the functions of processor 302. In addition, each integrated circuit may include circuitry (e.g., first circuitry, second circuitry, etc.) configured to perform the functions of processor(s) 302.

Further, as described herein, cellular communication circuitry 330 and short to medium range wireless communication circuitry 329 may each include one or more processing elements. In other words, one or more processing elements may be included in cellular communication circuitry 330 and, similarly, one or more processing elements may be included in short to medium range wireless communication circuitry 329. Thus, cellular communication circuitry 330 may include one or more integrated circuits (ICs) that are configured to perform the functions of cellular communication circuitry 330. In addition, each integrated circuit may include circuitry (e.g., first circuitry, second circuitry, etc.) configured to perform the functions of cellular communication circuitry 330. Similarly, the short to medium range wireless communication circuitry 329 may include one or more ICs that are configured to perform the functions of short to medium range wireless communication circuitry 329. In addition, each integrated circuit may include circuitry (e.g., first circuitry, second circuitry, etc.) configured to perform the functions of short to medium range wireless communication circuitry 329.

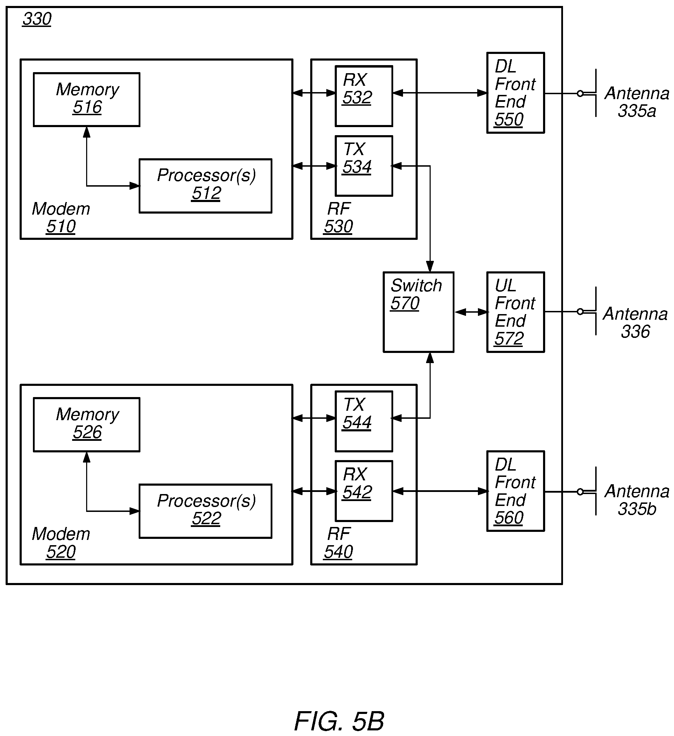

### Figure 5B: Block Diagram of Cellular Communication Circuitry

Figure 5B illustrates an example simplified block diagram of cellular communication circuitry, according to some embodiments. It is noted that the block diagram of the cellular communication circuitry of Figure 5B is only one example of a possible cellular communication circuit. According to embodiments, cellular communication circuitry 330 may be included in a communication device, such as communication device 106 described above. As noted above, communication device 106 may be a user equipment (UE) device, a mobile device or mobile station, a wireless device or wireless station, a desktop computer or computing device, a mobile computing device (e.g., a laptop, notebook, or portable computing device), a tablet and/or a combination of devices, among other devices.

The cellular communication circuitry 330 may couple (e.g., communicatively; directly or indirectly) to one or more antennas, such as antennas 335a-b and 336 as shown (in Figure 3). In some embodiments, cellular communication circuitry 330 may include dedicated receive chains (including and/or coupled to, e.g., communicatively; directly or indirectly. dedicated processors and/or radios) for multiple RATs (e.g., a first receive chain for LTE and a second receive chain for 5G NR). For example, as shown in Figure 5, cellular communication circuitry 330 may include a modem 510 and a modem 520. Modem 510 may be configured for communications according to a first RAT, e.g., such as LTE or LTE-A, and modem 520 may be configured for communications according to a second RAT, e.g., such as 5G NR.

As shown, modem 510 may include one or more processors 512 and a memory 516 in communication with processors 512. Modem 510 may be in communication with a radio frequency (RF) front end 530. RF front end 530 may include circuitry for transmitting and receiving radio signals. For example, RF front end 530 may include receive circuitry (RX) 532 and transmit circuitry (TX) 534. In some embodiments, receive circuitry 532 may be in communication with downlink (DL) front end 550, which may include circuitry for receiving radio signals via antenna 335a.

Similarly, modem 520 may include one or more processors 522 and a memory 526 in communication with processors 522. Modem 520 may be in communication with an RF front end 540. RF front end 540 may include circuitry for transmitting and receiving radio signals. For example, RF front end 540 may include receive circuitry 542 and transmit circuitry 544. In some embodiments, receive circuitry 542 may be in communication with DL front end 560, which may include circuitry for receiving radio signals via antenna 335b.

In some embodiments, a switch 570 may couple transmit circuitry 534 to uplink (UL) front end 572. In addition, switch 570 may couple transmit circuitry 544 to UL front end 572. UL front end 572 may include circuitry for transmitting radio signals via antenna 336. Thus, when cellular communication circuitry 330 receives instructions to transmit according to the first RAT (e.g., as supported via modem 510), switch 570 may be switched to a first state that allows modem 510 to transmit signals according to the first RAT (e.g., via a transmit chain that includes transmit circuitry 534 and UL front end 572). Similarly, when cellular communication circuitry 330 receives instructions to transmit according to the second RAT (e.g., as supported via modem 520), switch 570 may be switched to a second state that allows modem 520 to transmit signals according to the second RAT (e.g., via a transmit chain that includes transmit circuitry 544 and UL front end 572).

In some embodiments, the cellular communication circuitry 330 may be configured to perform methods PDU session handover between cellular and non-cellular access technologies as further described herein.

As described herein, the modem 510 may include hardware and software components for implementing the above features or for time division multiplexing UL data for NSA NR operations, as well as the various other techniques described herein. The processors 512 may be configured to implement part or all of the features described herein, e.g., by executing program instructions stored on a memory medium (e.g., a non-transitory computer-readable memory medium). Alternatively (or in addition), processor 512 may be configured as a programmable hardware element, such as an FPGA (Field Programmable Gate Array), or as an ASIC (Application Specific Integrated Circuit). Alternatively (or in addition) the processor 512, in conjunction with one or more of the other components 530, 532, 534, 550, 570, 572, 335 and 336 may be configured to implement part or all of the features described herein.

In addition, as described herein, processors 512 may include one or more processing elements. Thus, processors 512 may include one or more integrated circuits (ICs) that are configured to perform the functions of processors 512. In addition, each integrated circuit may include circuitry (e.g., first circuitry, second circuitry, etc.) configured to perform the functions of processors 512.

As described herein, the modem 520 may include hardware and software components for implementing the above features for communicating a scheduling profile for power savings to a network, as well as the various other techniques described herein. The processors 522 may be configured to implement part or all of the features described herein, e.g., by executing program instructions stored on a memory medium (e.g., a non-transitory computer-readable memory medium). Alternatively (or in addition), processor 522 may be configured as a programmable hardware element, such as an FPGA (Field Programmable Gate Array), or as an ASIC (Application Specific Integrated Circuit). Alternatively (or in addition) the processor 522, in conjunction with one or more of the other components 540, 542, 544, 550, 570, 572, 335 and 336 may be configured to implement part or all of the features described herein.

In addition, as described herein, processors 522 may include one or more processing elements. Thus, processors 522 may include one or more integrated circuits (ICs) that are configured to perform the functions of processors 522. In addition, each integrated circuit may include circuitry (e.g., first circuitry, second circuitry, etc.) configured to perform the functions of processors 522.

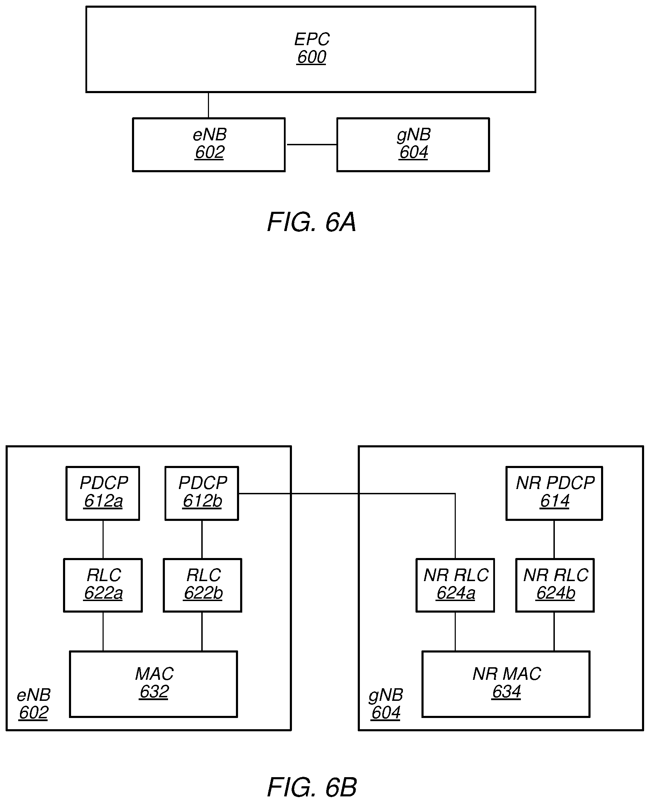

### Figures 6A and 6B: 5G NR Architecture with LTE

In some implementations, fifth generation (5G) wireless communication will initially be deployed concurrently with current wireless communication standards (e.g., LTE). For example, dual connectivity between LTE and 5G new radio (5G NR or NR) has been specified as part of the initial deployment of NR. Thus, as illustrated in Figures 6A-B, evolved packet core (EPC) network 600 may continue to communicate with current LTE base stations (e.g., eNB 602). In addition, eNB 602 may be in communication with a 5G NR base station (e.g., gNB 604) and may pass data between the EPC network 600 and gNB 604. Thus, EPC network 600 may be used (or reused) and gNB 604 may serve as extra capacity for UEs, e.g., for providing increased downlink throughput to UEs. In other words, LTE may be used for control plane signaling and NR may be used for user plane signaling. Thus, LTE may be used to establish connections to the network and NR may be used for data services.

Figure 6B illustrates a proposed protocol stack for eNB 602 and gNB 604. As shown, eNB 602 may include a medium access control (MAC) layer 632 that interfaces with radio link control (RLC) layers 622a-b. RLC layer 622a may also interface with packet data convergence protocol (PDCP) layer 612a and RLC layer 622b may interface with PDCP layer 612b. Similar to dual connectivity as specified in LTE-Advanced Release 12, PDCP layer 612a may interface via a master cell group (MCG) bearer with EPC network 600 whereas PDCP layer 612b may interface via a split bearer with EPC network 600.

Additionally, as shown, gNB 604 may include a MAC layer 634 that interfaces with RLC layers 624a-b. RLC layer 624a may interface with PDCP layer 612b of eNB 602 via an X₂ interface for information exchange and/or coordination (e.g., scheduling of a UE) between eNB 602 and gNB 604. In addition, RLC layer 624b may interface with PDCP layer 614. Similar to dual connectivity as specified in LTE-Advanced Release 12, PDCP layer 614 may interface with EPC network 600 via a secondary cell group (SCG) bearer. Thus, eNB 602 may be considered a master node (MeNB) while gNB 604 may be considered a secondary node (SgNB). In some scenarios, a UE may be required to maintain a connection to both an MeNB and a SgNB. In such scenarios, the MeNB may be used to maintain a radio resource control (RRC) connection to an EPC while the SgNB may be used for capacity (e.g., additional downlink and/or uplink throughput).

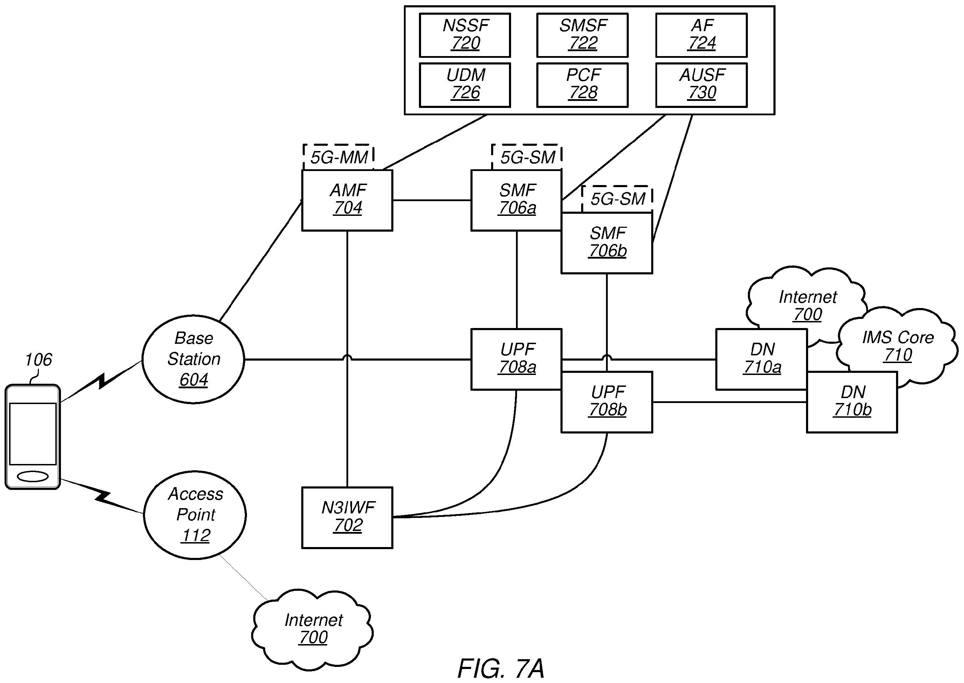

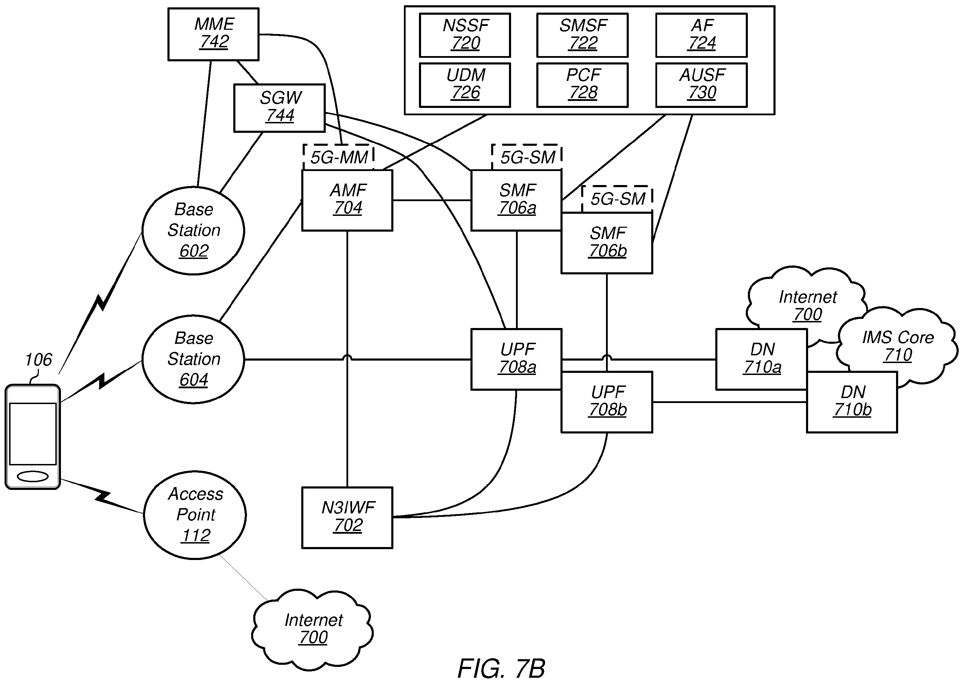

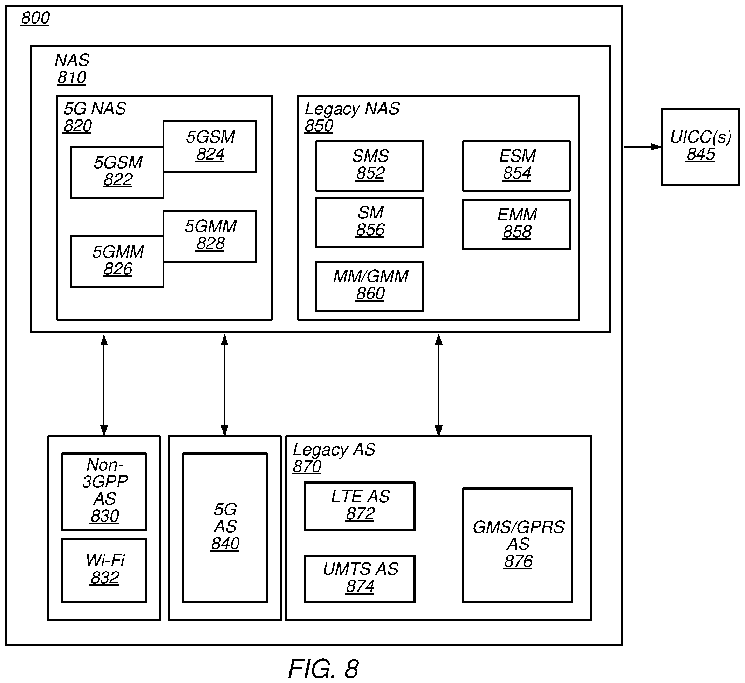

### Figures 7A, 7B and 8: 5G Core Network Architecture - Interworking with Wi-Fi

In some embodiments, the 5G core network (CN) may be accessed via (or through) a cellular connection/interface (e.g., via a 3GPP communication architecture/protocol) and a non-cellular connection/interface (e.g., a non-3GPP access architecture/protocol such as Wi-Fi connection). Figure 7A illustrates an example of a 5G network architecture that incorporates both 3GPP (e.g., cellular) and non-3GPP (e.g., non-cellular) access to the 5G CN, according to some embodiments. As shown, a user equipment device (e.g., such as UE 106) may access the 5G CN through both a radio access network (RAN, e.g., such as gNB or base station 604) and an access point, such as AP 112. The AP 112 may include a connection to the Internet 700 as well as a connection to a non-3GPP inter-working function (N3IWF) 702 network entity. The N3IWF may include a connection to a core access and mobility management function (AMF) 704 of the 5G CN. The AMF 704 may include an instance of a 5G mobility management (5G MM) function associated with the UE 106. In addition, the RAN (e.g., gNB 604) may also have a connection to the AMF 704. Thus, the 5G CN may support unified authentication over both connections as well as allow simultaneous registration for UE 106 access via both gNB 604 and AP 112. As shown, the AMF 704 may include one or more functional entities associated with the 5G CN (e.g., network slice selection function (NSSF) 720, short message service function (SMSF) 722, application function (AF) 724, unified data management (UDM) 726, policy control function (PCF) 728, and/or authentication server function (AUSF) 730). Note that these functional entities may also be supported by a session management function (SMF) 706a and an SMF 706b of the 5G CN. The AMF 706 may be connected to (or in communication with) the SMF 706a. Further, the gNB 604 may in communication with (or connected to) a user plane function (UPF) 708a that may also be communication with the SMF 706a. Similarly, the N3IWF 702 may be communicating with a UPF 708b that may also be communicating with the SMF 706b. Both UPFs may be communicating with the data network (e.g., DN 710a and 710b) and/or the Internet 700 and Internet Protocol (IP) Multimedia Subsystem/IP Multimedia Core Network Subsystem (IMS) core network 710.

Figure 7B illustrates an example of a 5G network architecture that incorporates both dual 3GPP (e.g., LTE and 5G NR) access and non-3GPP access to the 5G CN, according to some embodiments. As shown, a user equipment device (e.g., such as UE 106) may access the 5G CN through both a radio access network (RAN, e.g., such as gNB or base station 604 or eNB or base station 602) and an access point, such as AP 112. The AP 112 may include a connection to the Internet 700 as well as a connection to the N3IWF 702 network entity. The N3IWF may include a connection to the AMF 704 of the 5G CN. The AMF 704 may include an instance of the 5G MM function associated with the UE 106. In addition, the RAN (e.g., gNB 604) may also have a connection to the AMF 704. Thus, the 5G CN may support unified authentication over both connections as well as allow simultaneous registration for UE 106 access via both gNB 604 and AP 112. In addition, the 5G CN may support dual-registration of the UE on both a legacy network (e.g., LTE via base station 602) and a 5G network (e.g., via base station 604). As shown, the base station 602 may have connections to a mobility management entity (MME) 742 and a serving gateway (SGW) 744. The MME 742 may have connections to both the SGW 744 and the AMF 704. In addition, the SGW 744 may have connections to both the SMF 706a and the UPF 708a. As shown, the AMF 704 may include one or more functional entities associated with the 5G CN (e.g., NSSF 720, SMSF 722, AF 724, UDM 726, PCF 728, and/or AUSF 730). Note that UDM 726 may also include a home subscriber server (HSS) function and the PCF may also include a policy and charging rules function (PCRF). Note further that these functional entities may also be supported by the SMF706a and the SMF 706b of the 5G CN. The AMF 706 may be connected to (or in communication with) the SMF 706a. Further, the gNB 604 may in communication with (or connected to) the UPF 708a that may also be communication with the SMF 706a. Similarly, the N3IWF 702 may be communicating with a UPF 708b that may also be communicating with the SMF 706b. Both UPFs may be communicating with the data network (e.g., DN 710a and 710b) and/or the Internet 700 and IMS core network 710.

Note that in various embodiments, one or more of the above described network entities may be configured to perform methods to improve security checks in a 5G NR network, including mechanisms PDU session handover between cellular and non-cellular access technologies, e.g., as further described herein.

Figure 8 illustrates an example of a baseband processor architecture for a UE (e.g., such as UE 106), according to some embodiments. The baseband processor architecture 800 described in Figure 8 may be implemented on one or more radios (e.g., radios 329 and/or 330 described above) or modems (e.g., modems 510 and/or 520) as described above. As shown, the non-access stratum (NAS) 810 may include a 5G NAS 820 and a legacy NAS 850. The legacy NAS 850 may include a communication connection with a legacy access stratum (AS) 870. The 5G NAS 820 may include communication connections with both a 5G AS 840 and a non-3GPP AS 830 and Wi-Fi AS 832. The 5G NAS 820 may include functional entities associated with both access stratums. Thus, the 5G NAS 820 may include multiple 5G MM entities 826 and 828 and 5G session management (SM) entities 822 and 824. The legacy NAS 850 may include functional entities such as short message service (SMS) entity 852, evolved packet system (EPS) session management (ESM) entity 854, session management (SM) entity 856, EPS mobility management (EMM) entity 858, and mobility management (MM)/ GPRS mobility management (GMM) entity 860. In addition, the legacy AS 870 may include functional entities such as LTE AS 872, UMTS AS 874, and/or GSM/GPRS AS 876.

Thus, the baseband processor architecture 800 allows for a common 5G-NAS for both 5G cellular and non-cellular (e.g., non-3GPP access). Note that as shown, the 5G MM may maintain individual connection management and registration management state machines for each connection. Additionally, a device (e.g., UE 106) may register to a single PLMN (e.g., 5G CN) using 5G cellular access as well as non-cellular access. Further, it may be possible for the device to be in a connected state in one access and an idle state in another access and vice versa. Finally, there may be common 5G-MM procedures (e.g., registration, de-registration, identification, authentication, as so forth) for both accesses.

Note that in various embodiments, one or more of the above described functional entities of the 5G NAS and/or 5G AS may be configured to perform methods PDU session handover between cellular and non-cellular access technologies, e.g., as further described herein.

### PDU Session Handover between Cellular and Non-cellular Access Technologies

In current implementations, standards, e.g., such as 3GPP Release 16, have defined a call flow for handing over voice calls (e.g., time-sensitive (e.g., real-time and/or near real-time) protocol data unit (PDU) sessions) between non-3GPP access technologies (e.g., non-cellular access technologies such as Wi-Fi) and 3GPP access technologies (e.g., cellular access technologies such as LTE, LTE-A, and/or 5G NR). However, the defined call flow, described below in further detail, has inherent delays due to multiple signaling message exchanges that, although minimally impactful for most PDU sessions, may result in interruption of time-sensitive PDU sessions, such as voice calls, e.g., such as Voice over LTE (VoLTE) and/or Voice over NR (VoNR) calls.

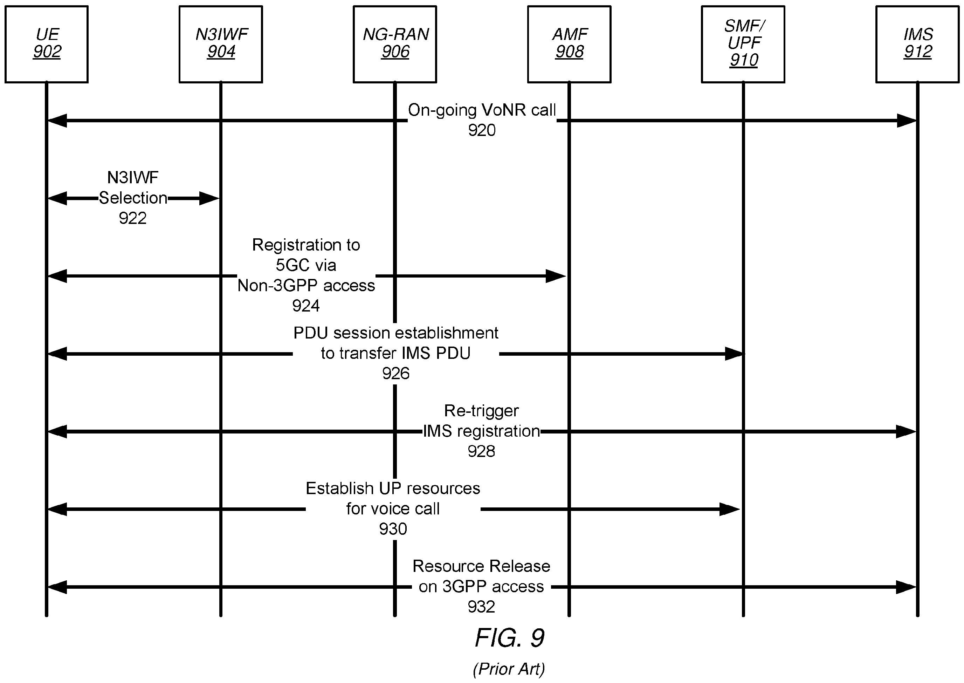

For example, Figure 9 illustrates an example of a call flow between a UE and a network to handover a VoNR call to Wi-Fi. As shown, at 920, a UE 902 may have an on-going VoNR call via NG radio access network (NG-RAN, e.g., a base station of the NG-RAN) 906 supported by IMS 912. Upon determining that the VoNR call will be handed over to Wi-Fi, UE 902 may initiate a registration procedure via selection of a N3IWF, such as N3IWF 904. Note that the N3IWF is defined as an element of the 5G SBA (Service Based Architecture) and is responsible for interworking between untrusted non-3GPP networks and the 5G Core. Thus, the N3IWF may support both N2 and N3 based connectivity to the core and IPSec connectivity towards the UE. After selection of the N3IWF, the UE may register, via AMF 908, to the 5G core (5GC) via non-3GPP access at 924. Once the registration procedure is complete, the UE may trigger PDU session establishment to transfer the IMS PDU at 926. The UE may set a request type to "existing PDU session." At 928, IMS 912 may re-trigger IMS registration with UE 902. Once the VoNR session is transferred, the network may establish the user plane resources for the VoNR session. Alternatively, if no user plane resources are established by the network, UE 902 may attempt to reestablish the user plane resources by initiating the service request procedure for the VoNR call at 930. Finally, at 932, IMS 912 may release resources on 3GPP access for the VoNR call. As noted above, the defined call flow, as illustrated by Figure 9, has inherent delays due to multiple signaling message exchanges that may result in interruption of voice calls, such as VoNR or VoLTE calls.

Similarly, when a UE has an on-going Wi-Fi call and that has to be handed over to 3GPP access (e.g., cellular access such as 5G NR or LTE), assuming the UE is already registered/attached to a cellular network, the UE may initiate a service request procedure to send a PDU session establishment (e.g., for 5G-NR access) and/or a PDN connectivity request (e.g., for LTE access). After the service request procedure is completed, the UE may send a PDU session establishment request that includes a of request type of "existing PDU session" and/or a PDN connectivity request to the network. Further, after successful PDU session/EPS bearer establishment, user plane may be established and the UE may trigger an IMS re-registration followed by continuation of a voice call flow. Again, as noted above, the defined call flow has inherent delays due to multiple signaling message exchanges that may result in interruption of voice calls, such as Wi-Fi calls when transferring the calls to VoNR or VoLTE calls.

Embodiments described herein provide systems, methods, and mechanisms for a UE, such as UE 106, to reduce messaging when handing over one or more PDU sessions, including emergency PDU sessions, from 3GPP access to non-3GPP access and/or from non-3GPP access to 3GPP access. In some embodiments, the UE may use a single message to register, transfer, and establish user plane resources for one or more PDU sessions. In some embodiments, a registration request may be modified to include an "Allowed PDU Session Status IE" as defined in 3GPP Release 15 and after. In some embodiments, a service request may be modified to include an "Allowed PDU Session Status IE" as defined in 3GPP Release 15 and after. In some embodiments, the UE may determine to include the "Allowed PDU Session Status IE" as defined in 3GPP Release 15 and after in a registration request and/or a service request based on one or more criterion and/or triggering events. In some embodiments, an AMF, such as AMF 704 may be configured to expect and/or accept an "Allowed PDU Session Status IE" as defined in 3GPP Release 15 and after included in a registration request and/or a service request from a UE, such as UE 106, in certain instances, e.g., such as handover from/to 3GPP access to/from non-3GPP access.

In some embodiments, the one or more criterion and/or triggering events may include one or more handover conditions, e.g., conditions indicating a requirement and/or desire to handover one or more PDU sessions handover from/to 3GPP access to/from non-3GPP access. For example, from the UE perspective, the UE may be in a connected mode via 3GPP access without (and/or with limited) non-3GPP access availability. Then, during a mobility event, the UE may discover availability of one or more non-3GPP access points and may elect to connect via at least one of the one or more non-3GPP access points. In such an instance, the UE may trigger handover of the one or more PDU sessions from 3GPP access to non-3GPP access. In some embodiments, election to connect via at least one of the one or more non-3GPP access points may be based, at least in part, on comparison of signal quality between 3GPP access and non-3GPP access, relative signal strength between 3GPP access and non-3GPP access, and/or one or more other conditions such as user preference and/or carrier preference. As another example, from the UE perspective, the UE may be in a connected mode via non-3GPP access without (and/or with limited) 3GPP access availability. Then, during a mobility event, the UE may discover availability of one or more 3GPP access points and may elect to connect via at least one of the one or more 3GPP access points. In such an instance, the UE may trigger handover of the one or more PDU sessions from non-3GPP access to 3GPP access. In some embodiments, election to connect via at least one of the one or more 3GPP access points may be based, at least in part, on comparison of signal quality between 3GPP access and non-3GPP access, relative signal strength between 3GPP access and non-3GPP access, and/or one or more other conditions such as user preference and/or carrier preference.

In some embodiments, the certain instances may include one or more handover conditions, e.g., conditions indicating a requirement and/or desire to handover one or more PDU sessions handover from/to 3GPP access to/from non-3GPP access. For example, from the network perspective, the UE may be in a connected mode via 3GPP access without (and/or with limited) non-3GPP access availability. Then, during a mobility event, the UE may discover availability of one or more non-3GPP access points and may receive instructions from the network to connect via at least one of the one or more non-3GPP access points. In such an instance, the network may trigger handover of the one or more PDU sessions from 3GPP access to non-3GPP access. In some embodiments, the instructions to connect via at least one of the one or more non-3GPP access points may be based, at least in part, on comparison of signal quality between 3GPP access and non-3GPP access as received in measurement reports from the UE, relative signal strength between 3GPP access and non-3GPP access as received in measurement reports from the UE, and/or one or more other conditions such as network preference e.g., based on current network conditions, such as 3GPP access load and/or non-3GPP access load) and/or carrier preference. As another example, from the network perspective, the UE may be in a connected mode via non-3GPP access without (and/or with limited) 3GPP access availability. Then, during a mobility event, the UE may discover availability of one or more 3GPP access points and may receive instructions from the network to connect via at least one of the one or more 3GPP access points. In such an instance, the network may trigger handover of the one or more PDU sessions from non-3GPP access to 3GPP access. In some embodiments, the instructions to connect via at least one of the one or more 3GPP access points may be based, at least in part, on comparison of signal quality between 3GPP access and non-3GPP access as received in measurement reports from the UE, relative signal strength between 3GPP access and non-3GPP access as received in measurement reports from the UE, and/or one or more other conditions such as network preference (e.g., based on current network conditions, such as 3GPP access load and/or non-3GPP access load) and/or carrier preference.

In some embodiments, a UE, such as UE 106, may have one or more on-going PDU sessions, such as VoNR call and/or a VoLTE call, and may determine/elect to handover the one or more on-going PDU sessions to Wi-Fi (e.g., non-3GPP access). In such embodiments, the UE may initiate a registration procedure and transmit a registration request. The registration request may include an "Allowed PDU Session Status IE" that may identify one or more on-going (IMS) PDU sessions as active in order to transfer the one or more on-going PDU session to Wi-Fi. In such embodiments, an AMF of the network, such as AMF 704, may forward the "Allowed PDU session Status IE" to an SMF of the network, such as SMF 706. The SMF may then trigger establishment of user plane resources via a selected UPF, such as UPF 708. In some embodiments, successful transfer of the one or more on-going PDU sessions and establishment of user plane resources may be indicated by the AMF to the UE via a registration accept message. In some embodiments, the registration accept message may include a "PDU session reactivation result" information element. In response to receiving the registration accept message, the UE may trigger IMS re-registration followed by continuation of voice call flow. Thus, in a single message, the UE may trigger registration, transfer, and establishment of user plane resources for the one or more on-going PDU sessions. In some embodiments, the network may initiate establishment of user plane resources for the one or more on-going PDU sessions.

In some embodiments, a UE, such as UE 106, may have one or more on-going PDU sessions, such as a VoWiFi call and/or a VoIP call, and may determine/elect to handover the one or more on-going PDU sessions to cellular (e.g., 3GPP access). In such embodiments, the UE may connect to a cellular network and/or the UE may be connected to a cellular network. The UE may initiate a service request procedure, e.g., such as a 5G NR service request procedure, that may include an "Allowed PDU session Status IE" that may identify one or more on-going (IMS) PDU sessions as active in order to transfer the one or more on-going PDU session to cellular. In such embodiments, an AMF of the network, such as AMF 704, may forward the "Allowed PDU session Status IE" to an SMF of the network, such as SMF 706. The SMF may then trigger establishment of user plane resources via a selected UPF, such as UPF 708. Thus, the network may establish user plane resources as part of the service request procedure. The UE may then trigger IMS re-registration followed by continuation of voice call flow. Thus, in a single message, the UE may trigger transfer and establishment of user plane resources for the one or more on-going PDU sessions. In some embodiments, the network may initiate establishment of user plane resources for the one or more on-going PDU sessions.

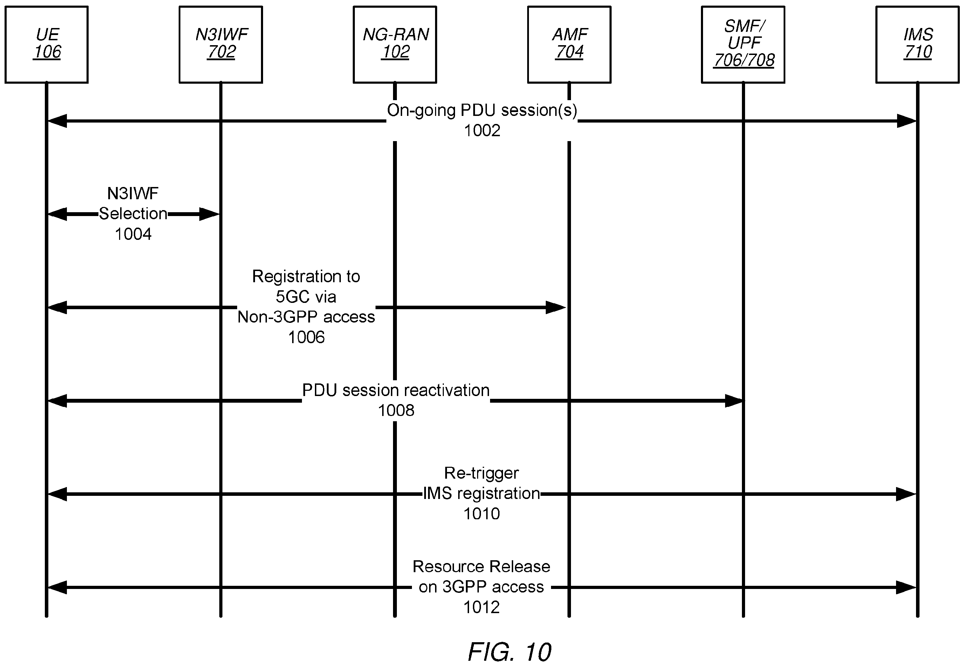

Figure 10 illustrates an example of signaling for a UE to handover one or more PDU sessions from 3GPP access to non-3GPP access, according to some embodiments. The signaling shown in Figure 10 may be used in conjunction with any of the systems, methods, or devices shown in the Figures, among other devices. In various embodiments, some of the signaling shown may be performed concurrently, in a different order than shown, or may be omitted. Additional signaling may also be performed as desired. As shown, this signaling may flow as follows.

At 1002, a UE, such as UE 106, may have one or more on-going PDU sessions with an IMS, such as IMS 710. The UE and/or network may elect and/or determine, based on one or more criteria and/or trigger events, to trigger handover of the one or more on-going PDU sessions from 3GPP access to non-3GPP access. In response to the election and/or determination, the UE may, at 1004, trigger selection of an N3IWF, such as N3IWF 702. Then, at 1006, the UE may initiate registration to a 5G core (e.g., 5 GC) via non-3GPP access by transmitting and/or sending an allowed PDU session status information element (IE) to an AMF of the network, such as AMF 704. In some embodiments, the allowed PDU session status IE may be included in a registration request. In some embodiments, the allowed PDU session status IE may identify the one or more on-going PDU sessions as active in order to transfer the one or more on-going PDU session to non-3GPP access. The AMF may forward the allowed PDU session status IE to an SMF of the network, such as SMF 706. The SMF may then trigger establishment of user plane resources via a selected UPF, such as UPF 708. At 1008, the SMF/UPF may indicate successful transfer of the one or more on-going PDU sessions and establishment of user plane resources to the UE, e.g., via a registration accept message. In some embodiments, the registration accept message may include a PDU session reactivation result IE. At 1010, in response to receiving the registration accept message, the UE may trigger IMS re-registration followed by continuation of voice call flow. At 1012, IMS 710 may release 3GPP access user plane resources for the one or more on-going PDU sessions.

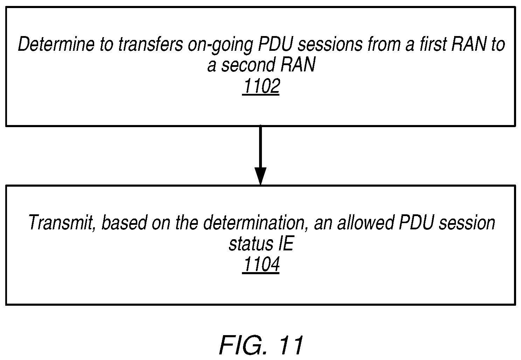

Figure 11 illustrates a block diagram of an example of a method for PDU session handover between cellular and non-cellular access technologies, according to some embodiments. The method shown in Figure 11 may be used in conjunction with any of the systems, methods, or devices shown in the Figures, among other devices. In various embodiments, some of the method elements shown may be performed concurrently, in a different order than shown, or may be omitted. Additional method elements may also be performed as desired. As shown, this method may operate as follows.

At 1102, a UE, such as UE 106, may determine to transfer on-going PDU sessions (e.g., one or more on-going PDU sessions) from a first radio access network (RAN) to a second RAN. In some embodiments, the determination may be based on a mobility condition (e.g., at the UE). In some embodiments, the UE may be connected to the first RAN (e.g., in a connected mode of operation on the first RAN) at the time of the determination. In some embodiments, the UE may be connected to both the first RAN and the second RAN at the time of the determination. In some embodiments, the on-going PDU sessions may include time-sensitive and/or non-time-sensitive PDU sessions. In some embodiments, the on-going PDU sessions may include a VoIP, VoWiFi, VoLTE, and/or a VoNR call. Thus, transfer of the on-going PDU sessions may include transfer of a VoIP/VoWiFi call to a VoLTE/VoNR and/or transfer of a VoLTE/VoNR call to a VoIP/VoWiFi call. In some embodiments, the first RAN may support one of 3GPP access (e.g., cellular access technologies such as LTE, LTE-A, and/or 5G NR) or non-3GPP access (e.g., WLAN access technologies such as Wi-Fi) and the second RAN may support the other one of the 3GPP access and non-3GPP access.

In some embodiments, the mobility condition may include the UE moving from a coverage area in which the first RAN is available but the second RAN is not available to a coverage area in which both the first RAN and second RAN are available. In some embodiments, the mobility condition may include the UE moving from a coverage area in which both the first RAN and the second RAN are available to a coverage area in which the first RAN is available but the second RAN is not available. In some embodiments, to detect the mobility condition, the UE may determine that the second RAN has a higher signal quality than the first RAN, determine that the second RAN has better signal strength as compared to the first RAN, receive an indication of a user preference of the second RAN over the first RAN, receive an indication of a carrier preference of the second RAN over the first RAN, and/or receive an indication from the first RAN to handover the on-going PDU sessions to the second RAN. In some embodiments, the indication from the first RAT RAN to handover the on-going PDU sessions to the second RAT RAN may be based on one or more measurement reports transmitted by the UE to the first RAN, network conditions on the first RAN, and/or network load management between the first RAN and the second RAN.

At 1104, the UE may transmit, in response to the determination, an allowed PDU session status IE to an AMF, such as AMF 704. In some embodiments, the allowed PDU session status IE may identify the on-going PDU sessions as active in order to transfer the on-going PDU sessions from the first RAN to the second RAN. In some embodiments, the on-going PDU sessions may be identified by a bitmap included in the allowed PDU session status IE. In some embodiments, the allowed PDU session status IE may trigger establishment of user plane resources for the on-going PDU sessions on the second RAN via a UPF, such as UPF 708. In some embodiments, when the first RAN supports 3GPP access and the second RAN supports non-3GPP access, the allowed PDU session status IE may be transmitted via a registration request. In some embodiments, when the first RAN supports non-3GPP access and the second RAN supports 3GPP access, the allowed PDU session status IE may be transmitted via a service request. In some embodiments, the allowed PDU session status IE may be as defined by 3GPP Release 15 and after. In some embodiments, the UE may trigger IMS re-registration, e.g., of the on-going PDU sessions.

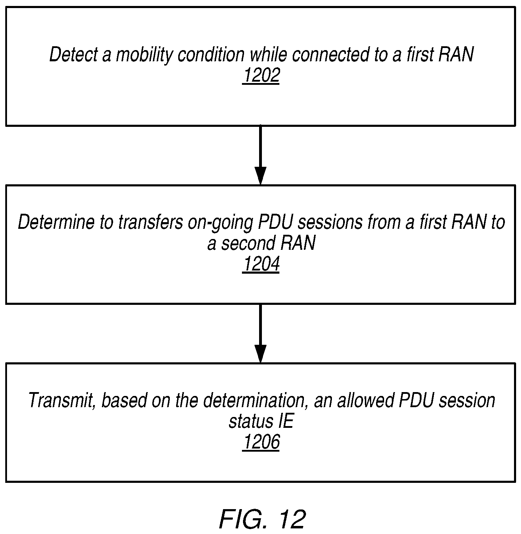

Figure 12 illustrates a block diagram of another example of a method for PDU session handover between cellular and non-cellular access technologies, according to some embodiments. The method shown in Figure 12 may be used in conjunction with any of the systems, methods, or devices shown in the Figures, among other devices. In various embodiments, some of the method elements shown may be performed concurrently, in a different order than shown, or may be omitted. Additional method elements may also be performed as desired. As shown, this method may operate as follows.

At 1202, a UE, such as UE 106, may detect a mobility condition, e.g., while connected to (e.g., in a connected mode on) a first radio access network. In some embodiments, the mobility condition may include the UE moving from a coverage area in which the first RAN is available but a second RAN is not available to a coverage area in which both the first RAN and second RAN are available. In some embodiments, the mobility condition may include the UE moving from a coverage area in which both the first RAN and the second RAN are available to a coverage area in which the first RAN is available but the second RAN is not available. In some embodiments, to detect the mobility condition, the UE may determine that the second RAN has a higher signal quality than the first RAN, determine that the second RAN has better signal strength as compared to the first RAN, receive an indication of a user preference of the second RAN over the first RAN, receive an indication of a carrier preference of the second RAN over the first RAN, and/or receive an indication from the first RAN to handover the on-going PDU sessions to the second RAN. In some embodiments, the indication from the first RAT RAN to handover the on-going PDU sessions to the second RAT RAN may be based on one or more measurement reports transmitted by the UE to the first RAN, network conditions on the first RAN, and/or network load management between the first RAN and the second RAN.

At 1204, the UE may determine to transfer on-going PDU sessions (e.g., one or more on-going PDU sessions) from the first RAN to the second RAN. In some embodiments, the determination may be based on detection of the mobility condition (e.g., at the UE). In some embodiments, the UE may be connected to both the first RAN and the second RAN at the time of the determination. In some embodiments, the on-going PDU sessions may include time-sensitive and/or non-time-sensitive PDU sessions. In some embodiments, the on-going PDU sessions may include a VoIP, VoWiFi, VoLTE, and/or a VoNR call. Thus, transfer of the on-going PDU sessions may include transfer of a VoIP/VoWiFi call to a VoLTE/VoNR and/or transfer of a VoLTE/VoNR call to a VoIP/VoWiFi call. In some embodiments, the first RAN may support one of 3GPP access (e.g., cellular access technologies such as LTE, LTE-A, and/or 5G NR) or non-3GPP access (e.g., WLAN access technologies such as Wi-Fi) and the second RAN may support the other one of the 3GPP access and non-3GPP access.

At 1206, the UE may transmit, in response to the determination, an allowed PDU session status IE to an AMF, such as AMF 704. In some embodiments, the allowed PDU session status IE may identify the on-going PDU sessions as active in order to transfer the on-going PDU sessions from the first RAN to the second RAN. In some embodiments, the on-going PDU sessions may be identified by a bitmap included in the allowed PDU session status IE. In some embodiments, the allowed PDU session status IE may trigger establishment of user plane resources for the on-going PDU sessions on the second RAN via a UPF, such as UPF 708. In some embodiments, when the first RAN supports 3GPP access and the second RAN supports non-3GPP access, the allowed PDU session status IE may be transmitted via a registration request. In some embodiments, when the first RAN supports non-3GPP access and the second RAN supports 3GPP access, the allowed PDU session status IE may be transmitted via a service request. In some embodiments, the allowed PDU session status IE may be as defined by 3GPP Release 15 and after. In some embodiments, the UE may trigger IMS re-registration, e.g., of the on-going PDU sessions.

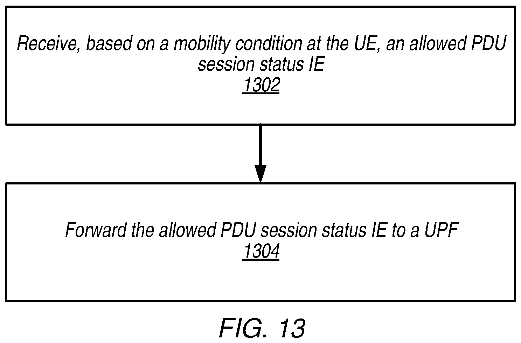

Figure 13 illustrates a block diagram of a further example of a method for PDU session handover between cellular and non-cellular access technologies, according to some embodiments. The method shown in Figure 13 may be used in conjunction with any of the systems, methods, or devices shown in the Figures, among other devices. In various embodiments, some of the method elements shown may be performed concurrently, in a different order than shown, or may be omitted. Additional method elements may also be performed as desired. As shown, this method may operate as follows.

At 1302, an AMF, such as AMF 704 may receive an allowed PDU session status IE from a UE, such as UE 106. In some embodiments, the allowed PDU session status IE may identify on-going PDU sessions between the UE and a first radio access network (RAN) as active in order to transfer the on-going PDU sessions from the first RAN to a second RAN. In some embodiments, the on-going PDU sessions may be identified by a bitmap included in the allowed PDU session status IE. In some embodiments, when the first RAN supports 3GPP access and the second RAN supports non-3GPP access, the allowed PDU session status IE may be transmitted via a registration request. In some embodiments, when the first RAN supports non-3GPP access and the second RAN supports 3GPP access, the allowed PDU session status IE may be transmitted via a service request. In some embodiments, the allowed PDU session status IE may be as defined by 3GPP Release 15 and after.

In some embodiments, the on-going PDU sessions may include time-sensitive and/or non-time-sensitive PDU sessions. In some embodiments, the on-going PDU sessions may include a VoIP, VoWiFi, VoLTE, and/or a VoNR call. Thus, transfer of the on-going PDU sessions may include transfer of a VoIP/VoWiFi call to a VoLTE/VoNR and/or transfer of a VoLTE/VoNR call to a VoIP/VoWiFi call. In some embodiments, the first RAN may support one of 3GPP access (e.g., cellular access technologies such as LTE, LTE-A, and/or 5G NR) or non-3GPP access (e.g., WLAN access technologies such as Wi-Fi) and the second RAN may support the other one of the 3GPP access and non-3GPP access.

In some embodiments, receipt of the allowed PDU session status IE from the UE may be based, at least in part, on a mobility condition of the UE. In some embodiments, the mobility condition may include the UE moving from a coverage area in which the first RAN is available but the second RAN is not available to a coverage area in which both the first RAN and second RAN are available. In some embodiments, the mobility condition may include the UE moving from a coverage area in which both the first RAN and the second RAN are available to a coverage area in which the first RAN is available but the second RAN is not available. In some embodiments, to detection of the mobility condition may include the UE determining that the second RAN has a higher signal quality than the first RAN, the UE determining that the second RAN has better signal strength as compared to the first RAN, the UE receiving an indication of a user preference of the second RAN over the first RAN, the AMF transmitting an indication of a carrier preference of the second RAN over the first RAN to the UE, and/or the AMF transmitting an indication to handover the on-going PDU sessions to the second RAN. In some embodiments, the indication to handover the on-going PDU sessions to the second RAT RAN may be based on one or more measurement reports transmitted by the UE to the AMF, network conditions on the first RAN, and/or network load management between the first RAN and the second RAN.

At 1304, the AMF may forward the allowed PDU session status IE to a UPF, such as UPF 708. In some embodiments, forwarding the allowed PDU session status IE to the UPF may trigger establishment of user plane resources for the on-going PDU sessions on the second RAN via the UPF. In some embodiments, forwarding the allowed PDU session status IE to the UPF may include the AMF forwarding the allowed PDU session status IE to an SMF, such as SMF 706. In such embodiments, the SMF may receive the allowed PDU session status IE from the AMF and forward the allowed PDU session status IE to the UPF, e.g., to establish user plane resources for the on-going PDU sessions on the second RAN.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Any of the methods described herein for operating a user equipment (UE) may be the basis of a corresponding method for operating a base station, by interpreting each message/signal X received by the UE in the downlink as message/signal X transmitted by the base station, and each message/signal Y transmitted in the uplink by the UE as a message/signal Y received by the base station.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method for handover of on-going protocol data unit, PDU, sessions between 3GPP access and non-3GPP access technologies, comprising:
a user equipment device, UE, (106),
determining (1102) to transfer one or more on-going PDU sessions from a first radio access network, RAN, to a second RAN based on detection of a mobility condition, wherein the first RAN supports one of 3GPP access or non-3GPP access, and wherein the second RAN supports the other one of 3GPP access and non-3GPP access; and
transmitting (1104), in response to determining to transfer the one or more on-going PDU sessions, an allowed PDU session status information element, IE, to a core access and mobility management function, AMF, (704).

2. The method according to claim 1,
wherein the allowed PDU session status IE identifies the one or more on-going PDU sessions as active in order to transfer the one or more on-going PDU sessions from the first RAN to the second RAN.

3. The method according to claim 2,
wherein the one or more on-going PDU sessions are identified by a bitmap included in the allowed PDU session status IE.

4. The method according to any of claims 1 to 3,
wherein the allowed PDU session status IE triggers establishment of user plane resources on the second RAN for the one or more on-going PDU sessions via a user plane function, UPF, (708).

5. The method according to any of claims 1 to 4,
wherein determining to transfer the one or more on-going PDU sessions comprises the UE (106):
discover availability of the second RAN; and
detect the mobility condition.

6. The method according to claim 5,
wherein detection of the mobility condition includes one or more of:
determining that the second RAN has a higher signal quality than the first RAN;
determining that the second RAN has better signal strength as compared to the first RAN;
receiving an indication of a user preference of the second RAN over the first RAN;
receiving an indication of a carrier preference of the second RAN over the first RAN; or
receiving an indication from the first RAN to handover the one or more on-going PDU sessions to the second RAN.

7. The method according to claim 6,
wherein the indication from the first RAN to handover the one or more on-going PDU sessions to the second RAN is based on at least one of:
one or more measurement reports transmitted by the UE (106) to the first RAN;
network conditions on the first RAN; or
network load management between the first RAN and the second RAN.

8. The method according to any of claims 1 to 7,
wherein the first RAN supports 3GPP access, and wherein the second RAN supports non-3GPP access.

9. The method according to claim 8,
wherein the allowed PDU session status IE is transmitted via a registration request.

10. The method according to any of claims 1 to 9,
wherein the first RAN supports non-3GPP access, and wherein the second RAN supports 3GPP access.

11. The method according to claim 10,
wherein the allowed PDU session status IE is transmitted via a service request.

12. The method according to any of claims 1 to 11,
wherein the allowed PDU session status IE is defined by 3GPP Release 15 and after.

13. The method according to any of claims 1 to 12,
wherein the one or more on-going PDU sessions include at least one of:
a voice over Internet Protocol, VoIP, call;
a voice over WiFi, VoWiFi, call;
a voice over Long Term Evolution, VoLTE, call; or
a voice over New Radio, VoNR, call.

14. A user equipment device, UE, (106), comprising:
a memory (306, 516, 526); and
one or more processors (302, 512, 522) in communication with the memory (306, 516, 526) and configured to cause the UE (106) to perform a method according to any of claim 1 to 13.

15. A non-transitory computer readable memory medium storing program instructions executable by circuitry (300, 329, 330) of a user equipment device, UE, (106) to cause the UE (106) to perform a method according to any of claim 1 to 13.
